# EUROPÄISCHE PATENTSCHRIFT

(11) **EP 1 289 794 B1**
(45) Veröffentlichungstag und Bekanntmachung des Hinweises auf die Patenterteilung: **10.08.2005**
(21) Anmeldenummer: 00949058.2
(22) Anmeldetag: 25.05.2000
(51) Int. Cl.: B60N 2/36, B60N 2/68

(54) **SITZBANK FÜR EIN FAHRZEUG MIT EINER KIPPBAREN RÜCKLEHNE**
VEHICLE REAR SEAT WITH A FOLD-DOWN BACKREST
BANQUETTE POUR VEHICULE POURVUE D'UN DOSSIER BASCULANT

(43) Veröffentlichungstag der Anmeldung: 12.03.2003
(73) Patentinhaber: TWB Presswerk GmbH. & Co. KG., 58089 Hagen (DE)
(72) Erfinder: FÖRSTER, Peter, D-31553 Sachsenhagen (DE); BALDUS, Hans-Joachim, D-57537 Wissen (DE)
(74) Vertreter: Dörner, Lothar, Dipl.-Ing.
(86) Internationale Anmeldenummer: PCT/DE2000/001703
(87) Internationale Veröffentlichungsnummer: WO 2001/089875

(56) Entgegenhaltungen:
- EP-A- 0 681 940
- EP-A- 0 689 957
- DE-U- 29 514 752
- GB-A- 2 298 123
- US-A- 4 493 505

## Beschreibung

Die Erfindung betrifft eine Sitzbank für ein Fahrzeug mit einer kippbaren Rücklehne, die in zwei Teile aufgeteilt ist, von denen mindestens eines von einer Platte gebildet ist, auf der ein Profil angeordnet ist, (siehe z.B. GB-A- 2 298 123, dem Oberbegriff entsprechend).

Sitzbänke sind in Kraftfahrzeugen im Fond angeordnet. In der Regel sind sie so ausgestaltet, daß drei Personen auf ihnen Platz nehmen können. Die Rücklehnen der Sitzbänke erfüllen dabei zweierlei Aufgaben: zum einen lehnen sich die Fondpassagiere während der Fahrt mit ihrem Rücken an ihnen an; zum anderen trennen sie den Fahrgast- vom Kofferraum. Zur Vergrößerung des Transportvolumens der Fahrzeuge sind die Rücklehnen der Sitzbänke kippbar im Fahrzeug angeordnet. Zur Erhöhung der Variabilität sind sie zusätzlich geteilt ausgeführt. In diesem Fall stützen sich die beiden Teile der Rücklehne nur noch an drei Punkten an der Fahrzeugkarosserie bzw. dem Fahrzeugboden ab.

Die passive Sicherheit der auf der Sitzbank außen sitzenden Passagiere ist mit Hilfe von Dreipunkt-Sicherheitsgurten gewährleistet. Der in der Mitte der Sitzbank befindliche Passagier war bisher mittels eines Beckengurtes nur unzureichend gesichert. Zu Erhöhung der passiven Sicherheit finden in modernen Fahrzeugen nun auch für die in der Mitte der Rückbank sitzenden Personen Dreipunkt-Sicherheitsgurte Anwendung.

Um auch für diesen Fall die Kippbarkeit der Rücklehne zu gewährleisten, muß der Retraktor des mittleren Dreipunktgurtes an der Rücklehne befestigt sein. Bei einem Unfall wird durch die abrupte Verzögerung des Fahrzeugs der Passagier sehr stark beschleunigt. Dieser Beschleunigung und der damit einhergehenden Vorverlagerung des Passagiers wirkt der Dreipunkt-Sicherheitsgurt entgegen, wodurch in dem Sicherheitsgurt sehr hohe Kräfte auftreten, die über den Retraktor auf die Rücklehne übertragen werden. Diese Kräfte und die an einem Punkt fehlende Abstützung der Rücklehne an der Karosserie bzw. dem Fahrzeugboden führen zu einem Einknicken der Rücklehne. Dadurch ist das Verletzungsrisiko der auf der Sitzbank beförderten Personen bei einem Unfall vergrößert.

Zur Erhöhung der Stabilität von Rücklehnen ist es bekannt, Stützkonstruktionen an der Rücklehne vorzusehen. So ist beispielsweise aus US 4 493 505 A eine kippbare Rücklehne bekannt, bei der auf einer durchgehenden Platte Verstärkungen angeordnet sind. Die Verstärkungen verlaufen im Wesentlichen entlang der Kontur der Platte. Die Verstärkungen weisen teilweise einen rohrartigen, teilweise einen streifenartigen Querschnitt auf. Darüber hinaus ist aus der eingangs zitierten GB 2 298 123 A eine kippbare Rücklehne bekannt, die aus einer Platte besteht, auf die ein Profil aufgeschweißt ist. Zwischen der Platte und dem Profil ist ein rohrartiger Querschnitt ausgebildet. Durch die Verbindung der Platte mit dem Profil ist eine Art Rahmen hervorgerufen. Zwar führen die bekannten Konstruktionen zur Erhöhung der Stabilität der Rücklehne. Jedoch sind die vorgesehenen Verstärkungen bzw. Profile in ihren Abmessungen und ihrer Form jeweils auf eine bestimmte Rücklehne bezogen, das heißt sie sind nur für einen einzigen Typ Rücklehne anwendbar. Eine Übertragung der jeweiligen Verstärkung bzw. des jeweiligen Profils auf eine andere Rücklehne für einen anderen Fahrzeugtyp ist nicht möglich. Die Konstruktionen weisen daher den Nachteil auf, dass sie nicht universell einsetzbar sind; vielmehr ist es erforderlich, für jeden Typ Rücklehne und damit für jeden Fahrzeugtyp eine eigene Konstruktion zu entwickeln.

Hier will die Erfindung Abhilfe schaffen. Der Erfindung liegt die Aufgabe zugrunde, eine kippbare Rücklehne zu schaffen, die unter Zuhilfenahme einer Stützkonstruktion eine hohe Stabilität aufweist, wobei die Stützkonstruktion universell für verschiedene Rücklehnen und damit verschiedene Fahrzeugtypen einsetzbar ist. Gemäß der Erfindung wird diese Aufgabe dadurch gelöst, dass das Profil aus Teilprofilen besteht, die zusammen einen Rahmen bilden, wobei die Teilprofile einen im Wesentlichen viereckigen, einseitig offenen Querschnitt aufweisen, an dessen offenen, der Platte zugewandten Seite rechtwinklig abgewinkelte Flansche vorgesehen sind, und dass die feraden Profilabschnitte jeweils durch gerade Teilprofile febildet sind, die in ihrer Länge stufenlos veränderlich ausgeführt sind.

Andere Ausgestaltungen und Weiterbildungen der Erfindung sind in den Unteransprüchen angegeben.

Mit der Erfindung ist eine Rücklehne geschaffen, die aufgrund des auf der Platte angeordneten Profils eine sehr hohe Stabilität aufweist, weil zwischen Platte und Profilen ein rohrartiger Querschnitt gebildet ist. Gleichzeitig ist aufgrund des modularen Aufbaus das Profil universell für verschiedene Typen Rücklehne und damit verschiedene Fahrzeugtypen einsetzbar. Es ist eine Art Baukastensystem für die Stützkonstruktion geschaffen. Hierdurch sind die Herstellkosten für die Stützkonstruktion wesentlich reduziert.

Gemäss der Erfindung weisen die Module einen viereckigen, einseitig offenen Querschnitt auf. Dieser Querschnitt ermöglicht die Herstellung der Module als Pressteile, wodurch die Herstellkosten für die Module gering sind. Gleichzeitig ist nach dem Anbringen der Module auf der Platte der rohrartige Einschluss gebildet; darüberhinaus weisen die Module an ihrer der Platte zugewandten Seite zwei rechtwinklig abgewinkelte Flansche auf. Mit Hilfe der Flansche sind die Module sicher und gleichzeitig auf einfache Weise auf der Platte anbringbar. Mit Hilfe der Flansche ist nämlich eine ausreichend große Kontaktfläche zwischen den Modulen und der Platte geschaffen.

In Weiterbildung der Erfindung weisen die Module wenigstens teilweise Anbindungen auf, durch die sie ineinander steckbar sind. Durch die Steckverbindungen ist ein äußerst einfacher Zusammenbau des Profils ermöglicht. Gleichzeitig besteht zwischen den einzelnen Modulen durch das Stecksystem ein Kraftschluss, der ein Knicken der Profile im Beiastungsfall verhindert.

In Ausgestaltung der Erfindung sind die Module miteinander verschweißt. Durch das Verschweißen ist eine sichere Verbindung der Module untereinander gewährleistet. Darüber hinaus handelt es sich dabei um eine preiswerte und zugleich schnell herstellbare Verbindung.

Vorteilhaft ist einer der Flansche nach innen, der andere Flansch nach außen abgewinkelt. Durch die Abwinklung eines der Flansche nach innen besteht die Möglichkeit, die Module am äußersten Rand der Platte vorzusehen, sodass die gesamte Stützkonstruktion im Wesentlichen die Kontur der Platte nachbildet. Durch diese am äußersten Rand der Platte vorgesehene Anordnung ist eine äußerst hohe Stabilität auch für den Fall gewährleistet, für den eine Belastung an der Rücklehne in ihrem äußersten Bereich auftritt.

In weiterer Ausgestaltung der Erfindung ist das Profil mit der Platte verschweißt. Durch die Verschweißung ist zusätzlich eine deutliche Erhöhung der Stabilität erreicht. Gleichzeitig ist die Herstellung der erfindungsgemäßen Rücklehne dadurch preiswert.

Vorteilhaft ist auf dem Umfang der Platte ein Trimmkanal vorgesehen. Der Trimmkanal dient zur Befestigung des Stoffbezugs der Polsterung der Rückbank.

In weiterer Ausgestaltung der Erfindung sind an der Platte Aufnahmen vorgesehen. Die Aufnahmen dienen der Befestigung von Sicherheits- oder Komfortzubehör.

Ein Ausführungsbeispiel der Erfindung ist in der Zeichnung dargestellt und wird nachfolgend im Einzelnen beschrieben. Es zeigen:

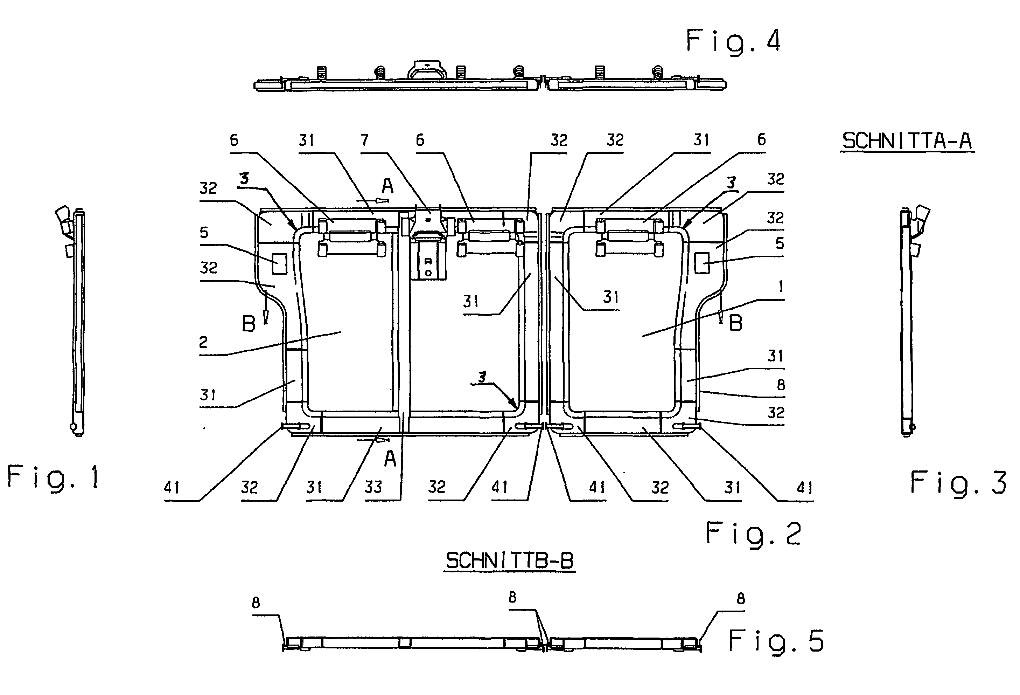

- Figur 1: die Seitenansicht von rechts einer Rücklehne;
- Figur 2: die Ansicht der in Figur 1 dargestellten Rücklehne;
- Figur 3: einen Schnitt entlang der Schnittlinie A-A aus Figur 2;
- Figur 4: die Untersicht der in Figur 2 dargestellten Rücklehne;
- Figur 5: einen Schnitt entlang der Schnittlinie B-B aus Figur 2;

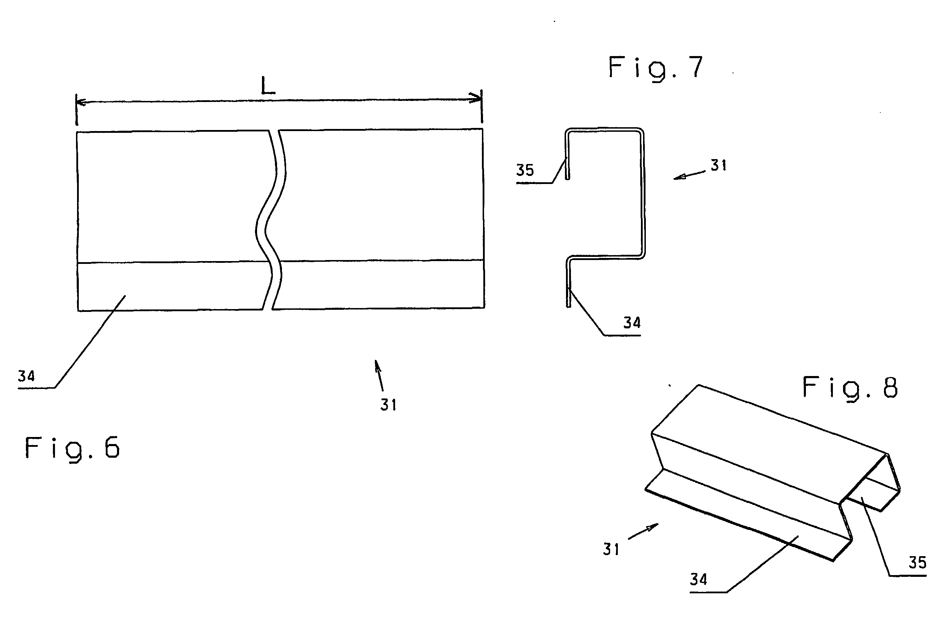

- Figur 6: die Ansicht eines Moduls;
- Figur 7: die Seitenansicht von links des in Figur 6 dargestellten Moduls;
- Figur 8: die perspektivische Darstellung des in Figur 6 dargestellten Moduls;

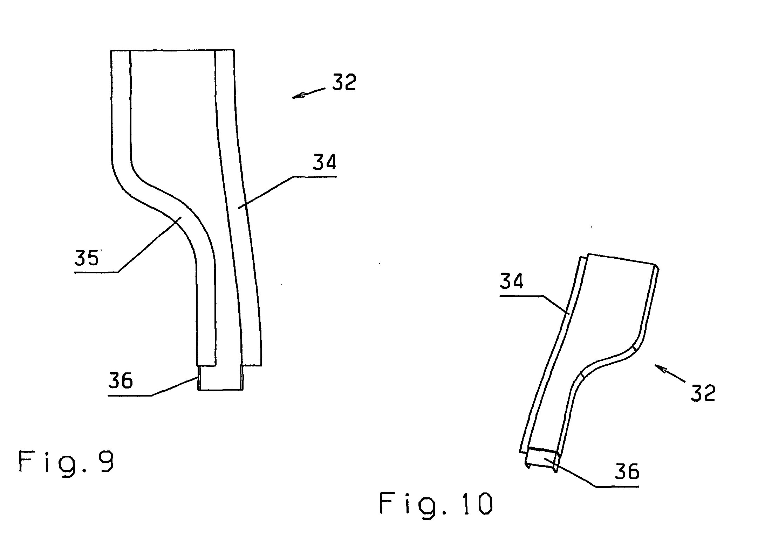

- Figur 9: die Untersicht eines Moduls in anderer Ausgestaltung;
- Figur 10: die perspektivische Darstellung des in Figur 9 dargestellten Moduls;

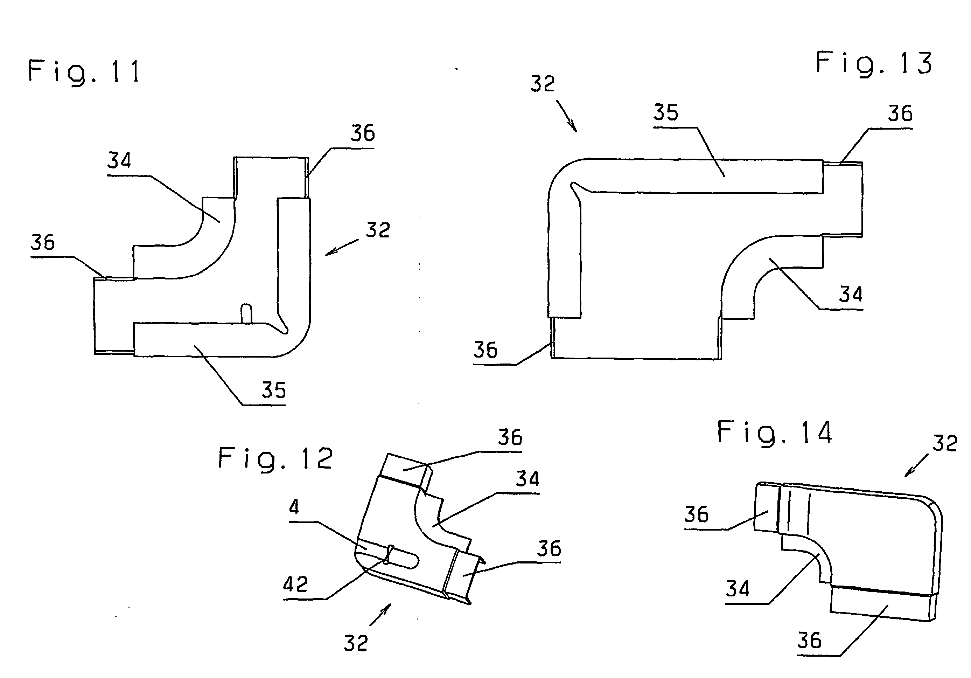

- Figur 11: die Untersicht auf ein Modul in einer weiteren Ausbildung;
- Figur 12: die perspektivische Darstellung des in Figur 11 dargestellten Moduls;
- Figur 13: die Untersicht auf ein Modul in einer zusätzlichen Ausbildung und
- Figur 14: eine perspektivische Darstellung des in Figur 13 dargestellten Moduls.

Die als Ausführungsbeispiel gewählte Rücklehne einer Sitzbank ist asymmetrisch im Verhältnis 1 /3 zu 2/3 geteilt. Sie weist eine im Wesentlichen rechteckige Form auf, wobei an den der Mittellinie der Rückenlehne abgewandten Seiten jeweils eine Aussparung vorgesehen ist. Die Aussparung bietet dem Radhaus der Hinterachse des jeweiligen Fahrzeugs nach Einbau der Rücklehne in ein Fahrzeug Platz. Der 1/3 ausmachende Teil der Rücklehne ist von einer Platte 1, der 2/3 der Rücklehne ausmachende Teil ist von einer Platte 2 gebildet. Auf den Platten 1, 2 ist jeweils ein Profil 3 angeordnet. Im Ausführungsbeispiel sind die Profile 3 mit den Platten 1 und 2 verschweißt. Die Profile 3 weisen an ihrem dem Fahrzeugboden zugewandten Ende Aufnahmen 4 für Scharniere auf, die das Umklappen der Rücklehne ermöglichen. Die Aufnahmen 4 nehmen Lagerbolzen 41 auf, die mit an dem Fahrzeug angeordneten - nicht dargestellten - Lagern korrespondieren. Die Lagerbolzen 41 sind in den Aufnahmen 4 von einer Öse 42 gehalten. Die Lagerbolzen 41 sind zueinander fluchtend angeordnet. Durch ihre Längsmittellinie verläuft die Drehachse der kippbaren Rücklehne.

Auf den über den Aussparungen für die Radkästen vorgesehenen Vorsprüngen ist auf den Profilen 3 eine Aufnahme 5 zur Befestigung je eines Schlosses vorgesehen, die der lösbaren Befestigung der Rücklehne mit der Karosserie des Fahrzeugs dienen.

An den Platten 1, 2 sowie den Profilen 3 sind weiterhin Kopfstützhalter 6 vorgesehen, in die die jeweiligen Kopfstützen mit ihren Stangen einsteckbar sind. Die Kopfstützhalter 6 sind an den Platten 1, 2 und an den Profilen 3 angeschweißt. An dem 1/3 ausmachenden Teil der Rücklehne ist ein Kopfstützhalter 6 vorgesehen; an dem 2/3 der Rücklehne ausmachenden Teil sind zwei Kopfstützhalter 6 vorgesehen. Darüber hinaus ist an dem 2/3 ausmachenden Teil der Rücksitzlehne eine Gurtaufnahme 7 vorgesehen. Die Gurtaufnahme 7 ist einerseits mit der Platte 2, andererseits mit dem Profil 3 verschweißt. An der Gurtaufnahme 7 ist ein - nicht dargestellter - Retraktor befestigbar, der zu einem ebenfalls nicht dargestellten Dreipunkt-Sicherheitsgurt gehört. Dieser Sicherheitsgurt ist für einen in der Mitte der Rückbank sitzenden Passagier vorgesehen. Zusätzlich kann insbesondere an dem 2/3 ausmachenden Teil der Rücklehne eine Durchladeöffnung mit einer Klappe vorgesehen sein, an der ein Skisack befestigbar ist.

Auf dem Umfang der Platten 1 und 2 ist abschnittsweise ein Trimmkanal 8 vorgesehen. Der Trimmkanal 8 dient der Aufnahme eines Stoffbezugs, mit dem eine Polsterfläche der Rücklehne bezogen ist. Die Polsterfläche ist in der Regel aus PU-Schaum hergestellt und formt die Polsterseite der Rücklehne aus. Der Trimmkanal 8 besteht aus Kederband mit einem C-Profil.

Das Profil 3 besteht aus Modulen 31, 32, die zusammen einen Rahmen bilden. Bei den Modulen 31 handelt es sich um Längen-Module, die immer im Wesentlichen die gleiche Form aufweisen und die lediglich in ihrer Länge variabel sind. Bei den Modulen 32 handelt es sich um Sonder-Module, mit deren Hilfe beispielsweise die Ecken des Profils 3 sowie die Aufnahmen 4 und 5 ausgebildet sind. Die Sondermodule 32 können von ihrer Form und Größe an den jeweiligen Fahrzeugtyp angepasst sein; die Ausbildung als universal anzuwendende Sonder-Module ist ebenfalls möglich. Zur weiteren Erhöhung der Stabilität ist an dem 2/3 ausmachenden Teil der Rücklehne ein vertikal ausgerichtetes Quer-Modul 33 vorgesehen.

Die Module 31, 32 und 33 weisen einen im Wesentlichen viereckigen, einseitig offenen Querschnitt auf. An ihren den Platten 1, 2 zugewandten Seiten weisen die Module 31, 32, 33 zwei rechtwinklig abgewinkelte Flansche 34, 35 auf. Die Flansche 34 und 35 liegen in montiertem Zustand der Module 31, 32, 33 auf den Platten 1, 2 auf. Der Flansch 34 ist nach außen abgewinkelt; der Flansch 35 ist nach innen abgewinkelt. Mit den Flanschen 34 und 35 sind die Module auf die Platten 1, 2 geschweißt. Die Module 31, 32, 33 weisen wenigstens teilweise Anbindungen 36 auf, durch die die Module ineinander steckbar sind. Im Bereich der Anbindungen 36 sind die Module 31, 32, 33 miteinander verschweißt.

Die Module 31, 32, 33 sind aus hochfestem Material hergestellt. Im Ausführungsbeispiel finden Trippstähle Anwendung. Dabei besteht die Möglichkeit, die Längen-Module 31 aus einem anderen Material als die Sonder-Module 32 herzustellen. Im Ausführungsbeispiel sind die Längen-Module 31 aus einem Trippstahl hergestellt, der eine Zugfestigkeit von 1.000 N/mm² aufweist; die Sonder-Module 32 aus einem Trippstahl, der eine Zugfestigkeit von 500 N/mm² aufweist. Die Platten 1 und 2 können aufgrund der hochfest ausgeführten Module 31, 32 und 33 aus herkömmlichem, glattem Blech hergestellt sein. Durch die Module ist trotzdem eine sehr hohe Stabilität erzielt. Durch die Verwendung der glatten Platten 1 und 2 ist darüber hinaus die Möglichkeit geschaffen, die dem Kofferraum zugewandte Seite der Rücklehne mit sehr dünnen Teppichen zu versehen, ohne die Gefahr einer Zerstörung bei unsachgemäßer Behandlung der Teppiche hervorzurufen. Dies resultiert daraus, dass keine Hohlräume unter den verwendeten Teppichböden aufgrund der glatten Platten 1 und 2 existieren.

Bei der Herstellung der erfindungsgemäßen Rücklehne werden zunächst die Platten 1 und 2 aus Blechen hergestellt. Es werden dann die Längen-Module 31 sowie die Sonder-Module 32 mit Hilfe der Anbindungen 36 ineinandergesteckt. Bei Bedarf wird das Quer-Modul 33 angeordnet. Im Bereich der Anbindungen 36 werden die Module miteinander verschweißt. Aus den Modulen 31, 32 ist dann das geschlossene Profil 3 hergestellt, das den Rahmen bildet. Im Anschluss wird das aus den Modulen 31 bis 33 bestehende Profil 3 auf die Platte 1 bzw. die Platte 2 aufgesetzt und verschweißt. Der Flansch 34 wird dabei von der Seite geschweißt, auf der das Profil 3 aufgesetzt ist; der Flansch 35 wird von der Rückseite der Platte 1 bzw. Platte 2 her verschweißt.

Zwischen den Sonder-Modulen 32 ist an jeder Längs- und Querseite mindestens ein Längen-Modul 31 angeordnet. Da die Länge der Längen-Module 31 stufenlos variabel ist, besteht die Möglichkeit, jede Rücklehne für ein Kraftfahrzeug mit den beschriebenen Bauteilen zu versehen. Das bedeutet, dass höhere oder breitere Rücklehnen problemlos mit dem beschriebenen Profil versehen werden können. Hierzu ist es grundsätzlich allein notwendig, die Längen L der vertikal und horizontal angeordneten Längen-Module 31 zu verändern. Die Sonder-Module 32 können dabei unverändert bleiben.

Bei Veränderung der Querschnitte der Module 31, 32, 33 ist darüber hinaus die Stabilität nahezu stufenlos variabel. Außerdem ist bei Modulen mit einem geringeren Querschnitt mehr Platz für die Polsterung der Rücklehne geschaffen, wodurch der Qualtitätseindruck der jeweiligen Rücklehne erhöht ist. Zusätzlich bedeutet die Verwendung querschnittskleinerer Module einen zusätzlichen Raumgewinn für den Fall, für den die Dicke der Polsterung unverändert bleibt.

Mit der beschriebenen Rücklehne ist eine erhebliche Gewichtsersparnis im Vergleich zu bekannten Rücklehnen möglich. Die Gewichtsersparnis beträgt bis zu 33 % in Bezug auf derzeit in Kraftfahrzeugen verwendeten Rücklehnen. Darüber hinaus ist die Rücklehne für Recycling gut geeignet, da außer dem ohnehin nachträglich anzubauenden Schloss sowie des aufzuklebenden Teppichs alle Bauteile aus einem Material hergestellt sind. Es ist daher weiter keine aufwendige Materialtrennung erforderlich.

## Patentansprüche

1. Sitzbank für ein Fahrzeug wobei die Sitzbank mit einer kippbaren Rücklehne versehen ist, die in zwei Teile aufgeteilt ist, von denen mindestens eines von einer Platte gebildet ist, auf der ein Profil angeordnet ist, **dadurch gekennzeichnet, dass** das Profil (3) aus Teilprofilen (31, 32, 33) besteht, die zusammen einen Rahmen bilden, wobei die Teilprofile (31, 32, 33) einen im Wesentlichen viereckigen, einseitig offenen Querschnitt aufweisen, an dessen offenen, der Platte zugewandten Seite rechtwinklig abgewinkelte Flansche (34, 35) vorgesehen sind, und dass die geraden Profilabschnitte jeweils durch gerade Teilprofile (31) gebildet sind, die in ihrer Länge stufenlos veränderlich ausgeführt sind.

2. Sitzbank nach Anspruch 1, **dadurch gekennzeichnet, dass** die Teilprofile (31, 32) wenigstens teilweise Anbindungen (36) aufweisen, durch die die Teilprofile (31, 32) ineinander steckbar sind.

3. Sitzbank nach Anspruch 1 oder 2, **dadurch gekennzeichnet, dass** die Teilprofile (31, 32, 33) miteinander verschweißt sind.

4. Sitzbank nach einem der Ansprüche 1 bis 3, **dadurch gekennzeichnet, dass** einer (34) der Flansche (34,35) nach innen, der andere Flansch (35) nach außen abgewinkelt ist.

5. Sitzbank nach einem der Ansprüche 1 bis 4, **dadurch gekennzeichnet, dass** das Profil (3) mit der Platte (1, 2) verschweißt ist.

6. Sitzbank nach einem der Ansprüche 1 bis 5, **dadurch gekennzeichnet, dass** auf dem Umfang der Platte (1, 2) ein Trimmkanal (8) vorgesehen ist.

7. Sitzbank nach einem der Ansprüche 1 bis 6, **dadurch gekennzeichnet, dass** an der Platte (1, 2) Aufnahmen vorgesehen sind.

## Claims

1. Vehicle rear seat, where the seat is fitted with a fold-down backrest which is divided into two parts, of which at least one is formed by a panel on which a profile is arranged, **characterised in that** the profile (3) consists of part-profiles (31, 32, 33) which together form a frame, the part-profiles (31, 32, 33) having a substantially rectangular cross section which is open on one side, on whose open side which faces the panel, right-angled flanges (34, 35) are provided, and the straight profile sections are each formed by straight part-profiles (31) which are continuously adjustable in length.

2. Seat according to claim 1, **characterised in that** at least some of the part-profiles (31, 32) have joints (36) by means of which the part-profiles (31, 32) can be pushed into one another.

3. Seat according to claim 1 or claim 2, **characterised in that** the part-profiles (31, 32, 33) are welded together.

4. Seat according to one of the claims 1 to 3, **characterised in that** one (34) of the flanges (34, 35) is angled inwards and the other flange (35) is angled outwards.

5. Seat according to one of the claims 1 to 4, **characterised in that** the profile (3) is welded to the panel (1, 2).

6. Seat according to one of the claims 1 to 5, **characterised in that** a trimming groove (8) is provided on the circumference of the panel (1, 2).

7. Seat according to one of the claims 1 to 6, **characterised in that** retainers are provided on the panel (1, 2).

## Revendications

1. Banquette de véhicule, la banquette étant pourvue d'un dossier basculant partagé en deux parties dont au moins une est formée d'une plaque sur laquelle est agencé un profilé, **caractérisée en ce que** le profilé (3) se compose de profilés partiels (31, 32, 33) qui ensemble forment un cadre, sachant que les profilés partiels (31, 32, 33) présentent essentiellement une section quadrangulaire ouverte d'un côté et que contre le côté ouvert tourné vers la plaque sont prévues des brides coudées à angle droit, et **en ce que** les sections rectilignes du profilé sont formées chacune par des profilés partiels rectilignes (31) dont les longueurs sont réalisées variables en continu.

2. Banquette selon la revendication 1, **caractérisée en ce que** les profilés partiels (31, 32) présentent au moins en partie des embouts de jonction (36) permettant d'emboîter les profilés partiels (31, 32) les uns dans les autres.

3. Banquette selon la revendication 1 ou 2, **caractérisée en ce que** les profilés partiels (31, 32, 33) sont soudés entre eux.

4. Banquette selon la revendication 1 à 3, **caractérisée en ce que** l'une (34) des brides (34, 35) est coudée vers l'intérieur, l'autre bride (35) est coudée vers l'extérieur.

5. Banquette selon l'une des revendications 1 à 4, **caractérisée en ce que** le profilé (3) est soudé avec la plaque (1, 2).

6. Banquette selon l'une des revendications 1 à 5, **caractérisée en ce que** sur le périmètre de la plaque (1, 2) est prévu un canal de compensation (8).

7. Banquette selon l'une des revendications 1 à 6, **caractérisée en ce que** des logements sont prévus contre la plaque (1, 2).
